# EUROPEAN PATENT SPECIFICATION

(11) **EP 2 889 477 B1**
(45) Date of publication and mention of the grant of the patent: **28.09.2016**
(21) Application number: 14200162.7
(22) Date of filing: 23.12.2014
(51) Int. Cl.: F03D 80/30, F03D 1/06, H02G 13/00

(54) **Wind turbine lightning protection system and corresponding wind turbine rotor**
Blitzschutzsystem einer Windturbine und entsprechender Windturbinenrotor
Système de protection contre la foudre d'une turbine éolienne et rotor de turbine éolienne

(30) Priority: 27.12.2013 JP 2013272842
(43) Date of publication of application: 01.07.2015
(73) Proprietor: MITSUBISHI HEAVY INDUSTRIES, LTD., Tokyo 108-8215 (JP)
(72) Inventor: Fujioka, Hideyasu, Tokyo, 108-8215 (JP); Feberwee, Nils, Lübeck (DE)
(74) Representative: Intès, Didier Gérard André

(56) References cited:
- WO-A1-2013/084374
- DE-U1-202006 000 673
- US-A1- 2005 254 949
- US-A1- 2012 162 850

## Description

### TECHNICAL FIELD

The present disclosure relates to a wind turbine rotor and a wind turbine having lightning-protection function.

### BACKGROUND

In recent years, a wind turbine utilizing wind force has become widely used from the viewpoint of preserving the global environment. A wind turbine normally includes a wind turbine rotor having a hub and a plurality of blades attached to the hub, a nacelle supporting the wind turbine rotor to be freely rotatable, and a tower to which the nacelle is mounted on its upper end. A wind turbine being a power generating facility converts kinetic energy of wind into rotation energy of the wind turbine rotor and then converts this rotation energy into electric power at a generator.

In such a wind turbine, the size of a wind turbine rotor has been increased recently in order to improve the efficiency. When the diameter of a wind turbine rotor is increased, normally, the entire length of the tower also increases. As a result, the wind turbine rotor is disposed at a position (level) at a great distance from the ground surface. Also, a wind turbine rotor is often disposed at a high level for the purpose of effective recovery of the wind energy, and it is also often installed on a vast land or ocean where it is likely to receive wind, which raises the risk of being damaged by lightning strikes. Thus, lightning-protection design for wind turbine rotors has become increasingly important.

For instance, Patent Documents 1 to 3 disclose various configurations for blades having lightning protection. Specifically, Patent Documents 1 to 3 disclose blades configured to direct lightning current to blade roots from receptors (lightning-receiving units) disposed on blade tips via down conductors of a sheet-like shape or a mesh-like shape.

### Citation List

### Patent Literature

Patent Document 1: US2008/145229
Patent Document 2: US7883321
Patent Document 3: US2010/0329865
WO 2013/084374 discloses a lightning current transfer system for a wind turbine generator.

### SUMMARY

### Technical Problem

As described in Patent Documents 1 to 3, most of conventional lightning-protection systems provided for wind turbine rotors mainly protect the blades from lightning strikes. Especially, in a wind turbine power generating apparatus with great rotor diameter, lightning-protection measures for blades have been exclusively regarded as important because the tip ends of the blades of the wind turbine pass through the highest level as the rotor rotates.

However, when the diameter of a wind turbine rotor is increased and the blades are elongated, the distance between the tip ends of adjacent blades in fact increases, raising the possibility of being unable to capture lightning with receptors on the blades even if the receptors are disposed on the tip ends of the blades, for instance. Also, depending on the stopped position (for instance, the Y position or the anti-Y position) of a wind turbine rotor, lightning may not hit the receptor of a blade due to the angular position of the blades. As described above, direction of lightning varies depending on the environmental conditions or the like, and lightning does not necessarily hit a blade.

The possibility that lightning hits a part other than blades of a wind turbine rotor, however, has been hardly considered in the conventional designs.

With regard to the above issues, an object of at least one embodiment of the present invention is to provide a wind turbine rotor and a wind turbine which are capable of protecting the wind turbine rotor from lightning strikes which hit a part other than blades of the wind turbine rotor.

A wind turbine rotor according to at least one embodiment of the present invention is defined by claim 1 and includes: at least one blade; a hub to which the at least one blade is attached; a spinner disposed so as to cover the hub, the spinner including an insulating material; a blade lightning-protection system provided for each of the at least one blade; and a spinner lightning-protection system provided for the spinner. The blade lightning-protection system includes: a blade receptor disposed on the at least one blade; and a current transmitting part electrically connected to the blade receptor for transmitting lightning current from the blade receptor to a grounding current path on a nacelle side. Also, the spinner lightning-protection system includes: at least one spinner receptor disposed on the spinner; and a cable for electrically connecting the spinner receptor and the current transmitting part.

In the present description, an "electrically connected" state includes a case where two objects to be connected are continuously connected via a conducting body and a case where a slight gap is disposed in a path between the two objects, the gap being so slight that the two objects are no more isolated and allow electric discharge when lightning current flows between the two objects.

The above described wind turbine rotor includes the spinner lightning-protection system provided separately from the blade lightning-protection system, and the receptors disposed on the spinner as the spinner protection-lightning system. Thus, it is possible to protect the wind turbine rotor from lightning strikes that have not been captured by the blade lightning-protection system or the like.

Further, the wind turbine rotor includes the current transmitting part for transmitting lightning current from the blade receptors of the blade lightning-protection system to the grounding current path on the nacelle side. Also, the spinner receptors of the spinner lightning-protection system are electrically connected to the current transmitting part of the blade lightning-protection system via the cables. In this way, it is possible to transmit lightning current from the spinner receptors to the grounding current path on the nacelle side via the current transmitting part of the blade lightning-protection system. As a result, it is possible to protect various devices which need to be protected from damage due to lightning current when the spinner receptor is hit by lightning.

Still further, both of the blade receptor and the spinner receptor are electrically connected to the grounding current path on the nacelle side via the current transmitting part of the blade lightning-protection system. Thus, it is possible to share the grounding current path between the blade lightning-protection system and the spinner lightning-protection system, the grounding current path being disposed on the nacelle side for transmitting lightning current. As a result, it is possible to simplify the device configuration of the lightning-protection system in the wind turbine rotor, and to reduce the weight of the wind turbine rotor in consequence of the reduced number of the components.

In some embodiments, the current transmitting part is disposed on a blade root portion of the at least one blade. Also, the at least one spinner receptor includes a plurality of receptors disposed on different positions on the spinner. Moreover, the spinner lightning-protection system includes: a plurality of main cables for electrically connecting respective two or more receptors from among the plurality of receptors to the current transmitting part; and a plurality of sub cables for electrically connecting the plurality of receptors with one another.

As described above, the spinner receptor includes a plurality of receptors disposed on different positions on the spinner, which makes it possible to capture lightning passing through the region over a broad range around the hub by use of the spinner receptor, and to further improve the lightning-protection performance of the wind turbine rotor. Also, two or more receptors of the plurality of receptors are each electrically connected to the current transmitting part via the corresponding one of the plurality of main cables while the plurality of receptors are electrically connected to one another via the sub cables. Thus, it is possible to transmit lightning current in a distributed manner through the plurality of main cables from the receptors to the current transmitting part. Further, since the plurality of receptors are electrically connected to one another via the sub cables, providing only one main cable for each of the two or more receptors may be sufficient, which makes it possible to reduce the number of the main cables compared to a case where all the receptors are electrically connected individually to the current transmitting part.

In some embodiments, the at least one spinner receptor includes a first receptor, and a plurality of second receptors disposed at a rear side with respect to the first receptor in a discretely-distributed fashion in a circumferential direction centered at a rotation axis of the wind turbine rotor. Herein, a hub side is defined as a front side and a nacelle side is defined as the rear side in an axial direction of the rotation axis of the wind turbine rotor. The first receptor and each of the plurality of second receptors are electrically connected to each other via corresponding one of the sub cables. Also, the plurality of main cables are disposed so as to electrically connect respective ones of the plurality of second receptors to the current transmitting part.

As described above, the at least one spinner receptor includes the first receptor and the second receptors disposed on the rear side with regard to the first receptor, which makes it possible to extend the outer circumferential (lateral) region of the hub, where the lightning-protection function of the spinner receptors is effective, in the front-rear direction. Thus, it becomes possible to capture lightning passing through the region over a broad range around the hub by use of the spinner receptors, and thus to further improve the lightning-protection performance of the wind turbine rotor. Also, the second receptors are disposed in a discretely-distributed fashion in the circumferential direction centered at the rotation axis, which makes it possible to reduce the weight of the wind turbine rotor by reducing the size of the second receptors.

In one embodiment, the wind turbine rotor further includes conductive supports for supporting the main cables. The supports are arranged so as to be electrically isolated from the hub and a conductive member disposed in the spinner. The main cables are electrically connected to the current transmitting part via the supports.

As described above, the supports for supporting the main cables have conductivity and also have the function of electrically connecting the main cables and the current transmitting part, which makes it possible to reduce the number of components and to facilitate the installation work. The supports are arranged so as to be electrically isolated from the hub and the conductive member disposed in the spinner, which makes it possible to protect a conductive member inside the spinner, the hub, or a conductive member electrically connected to the hub from lightning strikes.

In one embodiment, the sub cables are arranged to be separated from the conductive member.

As a result, it is possible to protect the conductive member disposed in the spinner from lightning strikes. Especially, arranging the sub cables away from the conductive member by a sufficient distance makes it possible to prevent short circuit from the sub cables to the conductive member.

In one embodiment, the spinner includes a plurality of divided sections of the spinner. Each of the sections includes a joint part which is to be joined to another section disposed adjacent to said each of the sections. Also, at least a part of the main cables or at least a part of the sub cables extends along the joint part.

Normally, when the spinner has a divided configuration, the joint part of each section is formed to have higher stiffness than that of other parts in order to secure joint strength. Thus, extending a part of the main cables or a part of the sub cables along the joint part makes it possible to prevent decrease in the strength of the spinner even if fixing members such as bolts are attached to the spinner for fixing the cables to the spinner. Also, it is possible to fix the main cables or the sub cables to the spinner by using the fixing members for joining the sections of the spinner with each another.

In one embodiment, the main cables or the sub cables are cables having cable ampacity of at least 200kA.

As a result, it is possible to transmit the maximum lightning current expected under typical circumstances to the grounding current path without damaging the main cables or the sub cables.

In one embodiment, the number of the main cables included in the spinner lightning-protection system is n, and the main cables or the sub cables are cables having cable ampacity of at least (200 / n) kA.

According to this embodiment, when any one of the receptors (the first receptor or the second receptors) is hit by lightning, lightning current from the hit receptor is distributed to the n main cables. As a result, it is possible to decrease the maximum lightning current flowing through each main cable.

In some embodiments, the spinner receptor is disposed so as to be electrically isolated from the hub and a conductive member disposed in the spinner.

As a result, even when the spinner receptor is hit by lightning, it is possible to protect the hub and various components disposed in the spinner including a conductive member (for instance, the pitch bearing) electrically connected to the hub from lightning. Also, it is possible to prevent lightning current not only from flowing into components disposed in the spinner, but from flowing through the hub into various components (for instance, the main bearings of the main shaft of the wind turbine coupled to the hub of the wind turbine rotor) of the wind turbine disposed elsewhere.

In some embodiments, the spinner lightning-protection system includes: at least one cable for electrically connecting the at least one spinner receptor to the current transmitting part of the wind turbine rotor; and a conductive fixing member for fixing the at least one cable and the at least one spinner receptor to the spinner. The at least one cable is configured to be electrically connected to the at least one spinner receptor via the fixing member.

As a result, the fixing member for fixing the at least one cable and the at least one spinner receptor to the spinner has conductivity and also has the function of electrically connecting the at least one cable and the at least one spinner receptor, which makes it possible to reduce the number of components and to facilitate the installation work.

In some embodiments, the wind turbine rotor further includes a pitch bearing for attaching the blade root portion of the at least one blade to the hub. A distance between the pitch bearing and the current transmitting part is larger than a distance between corresponding one of the main cables and the current transmitting part.

As a result, even in the event of a short circuit of the main cable, it is possible to protect the pitch bearing because the short-circuit current flows into the current transmitting part disposed closer to the main cable than the pitch bearing is.

In one embodiment, the distance between the pitch bearing and the current transmitting part is not less than 0.3m.

In another embodiment, the distance between the pitch bearing and the corresponding main cable is not less than 0.3m.

In some embodiments, the spinner includes non-conductive fiber-reinforced plastic.

As a result, it is possible to improve the possibility that lightning hits a receptor of the spinner lightning-protection system.

A wind turbine according to at least one embodiment of the present invention is defined by claim 15 and includes: at least one blade; a hub to which the at least one blade is attached; a spinner disposed so as to cover the hub, the spinner including an insulating material; a blade lightning-protection system provided for each of the at least one blade; and a spinner lightning-protection system provided for the spinner. The blade lightning-protection system includes: a blade receptor disposed on the at least one blade; and a current transmitting part electrically connected to the blade receptor for transmitting lightning current from the blade receptor to a grounding current path on a nacelle side. The spinner lightning-protection system includes: at least one spinner receptor disposed on the spinner; and a cable for electrically connecting the at least one spinner receptor and the current transmitting part.

The above described wind turbine includes the spinner lightning-protection system provided separately from the blade lightning-protection system and the receptor disposed on the spinner as the spinner protection-lightning system, which makes it possible to protect the wind turbine rotor from lightning strikes that have not been captured by the blade lightning-protection system or the like.

Further, the at least one spinner receptor of the spinner lightning-protection system is electrically connected to the current transmitting part of the blade lightning-protection system via the cable. In this way, it is possible to transmit lightning current from the at least one spinner receptor to the grounding current path on the nacelle side via the current transmitting part. As a result, it is possible to protect various devices which need to be protected from damage due to lightning current when the spinner receptor is hit by lightning.

Still further, both of the blade receptor and the spinner receptor are electrically connected to the grounding current path on the nacelle side via the current transmitting part of the blade lightning-protection system. Thus, it is possible to share the grounding current path on the nacelle side for transmitting lightning current between the blade lightning-protection system and the spinner lightning-protection system. As a result, it is possible to simplify the device configuration of the lightning-protection system in the wind turbine rotor and to reduce the weight of the wind turbine rotor in consequence of the reduced number of the components.

According to at least one embodiment of the present invention, a spinner lightning-protection system is provided separately from a blade lightning-protection system and at least one receptor is disposed on a spinner as the spinner protection-lightning system, which makes it possible to protect a wind turbine rotor from lightning strikes that have not been captured by the blade lightning-protection system or the like.

Further, the at least one spinner receptor of the spinner lightning-protection system is electrically connected to a current transmitting part of the blade lightning-protection system via a cable. In this way, it is possible to protect various devices which need to be protected from damage due to lightning current when the spinner receptor is hit by lightning.

Still further, both of the blade receptor and the spinner receptor are electrically connected to a grounding current path on the nacelle side via the current transmitting part of the blade lightning-protection system. As a result, it is possible to simplify the device configuration of the lightning-protection system in the wind turbine rotor and to reduce the weight of the wind turbine rotor in consequence of the reduced number of the components.

### BRIEF DESCRIPTION OF DRAWINGS

FIG. 1 is a schematic diagram of an overall configuration of a wind turbine according to one embodiment.
FIG. 2 is a perspective view of a wind turbine rotor according to one embodiment.
FIG. 3 is a perspective view of an example of a divided structure of a spinner according to one embodiment.
FIG. 4 is a planar view of an exemplary configuration of a blade having a blade lightning-protection system according to one embodiment.
FIG. 5 is a side view of an exemplary configuration of a grounding electric-current path according to one embodiment.
FIGs. 6A to 6C are front views of arrangements of spinner receptors according to different embodiments.
FIG. 7 is a perspective view of an overall configuration of a spinner lightning-protection system according to one embodiment.
FIG. 8 is a cross-sectional view of an example of an installed spinner lightning-protection system according to one embodiment, taken along the line G-G from FIG. 7.
FIG. 9 is a perspective view of an attached state of a second receptor and cables according to one embodiment.
FIG. 10 is a perspective view of an attached state of a cable according to one embodiment.
FIG. 11 is a perspective view of an attached state of a cable and a discharge ring according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

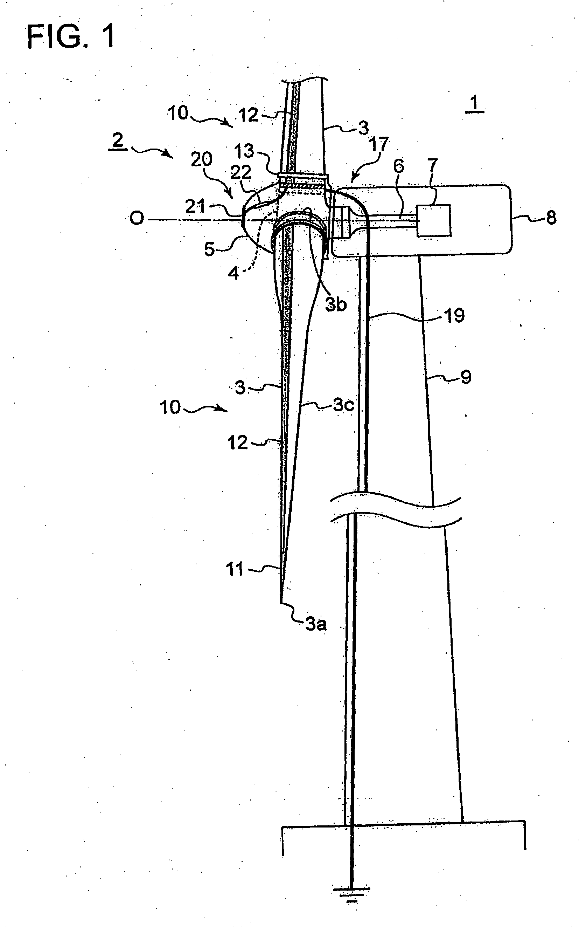

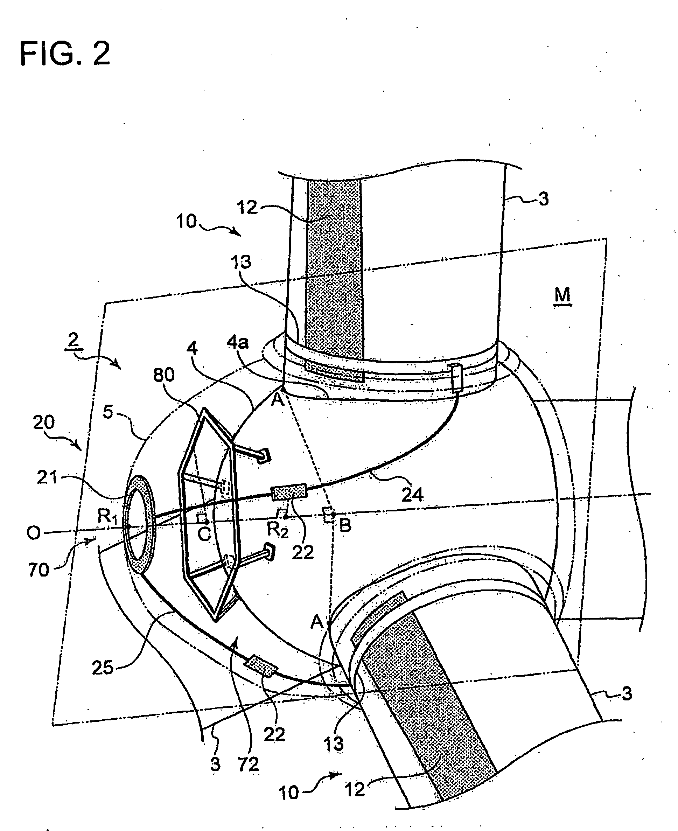

Referring to FIGs. 1 and 2, an overall configuration of a wind turbine according to one embodiment will now be described. FIG. 1 is a schematic diagram of an overall configuration of a wind turbine according to one embodiment. FIG. 2 is a perspective view of an exemplary configuration of a wind turbine rotor according to one embodiment. Although a wind turbine power generating apparatus having a generator is described in the following embodiments as an example of a wind turbine, a wind turbine according to the embodiment of the present invention may be employed in any kind of apparatus as long as the apparatus is configured capable of converting wind force energy into driving force.

As illustrated in FIG. 1, a wind turbine 1 includes a wind turbine rotor 2 which rotates upon receiving wind, a main shaft 6 coupled to a hub 4, and a generator 7 which generates electric power using rotation energy of the main shaft 6. The wind turbine 1 may also include a drive train (not illustrated) for transmitting rotation energy of the main shaft 6 to the generator 7. In this case, a hydraulic transmission or a gear box may be used as the drive train, for instance.

Further, various devices including the main shaft 6 are housed in a nacelle 8. The nacelle 8 supports the wind turbine rotor 2 thereon to be rotatable.

The wind turbine rotor 2 according to some embodiments has the following configuration.

The wind turbine rotor 2 includes at least one blade 3, a hub 4 to which the at least one blades 3 is attached, and a spinner 5 covering the hub 4. Although the present embodiment illustrates three blades 3 attached to the hub 4, the number of the blades 3 may be two, or more than three.

Each blade 3 includes a blade tip portion 3a, a blade root portion 3b, and an airfoil portion 3c disposed between the blade tip portion 3a and the blade root portion 3b. Also, a part of each blade 3 may be made of fiber-reinforced plastic such as glass-fiber-reinforced plastic (GFRP) and carbon-fiber-reinforced plastic (CFRP).

The hub 4 includes blade attachment portions 4a to which the blade root portions 3b are attached via pitch bearings (not illustrated). The hub 4 normally includes conductive material, such as cast steel.

A variety of conductive members are arranged around the hub 4. As illustrated in FIG. 2, as an exemplary configuration of the conductive members, a supporting structure 80 for supporting the spinner 5 on the hub 4 will be described. The supporting structure 80 includes conductive material such as steel, and is mounted to the hub 4. In other words, it has an electrically connected relationship with the hub 4. Thus, when lightning current flows through the supporting structure 80, the lightning current flows into the main shaft 6 through the hub 4, which may damage the main bearing for supporting the main shaft 6. Accordingly, a conductive member electrically connected to the hub 4 is in a positional relationship such that the conductive member is electrically isolated from the spinner receptors, which will be described below. Besides, conductive members include work scaffoldings, piping and cooling devices, for instance. Also, in the present description, an "electrically isolated" state includes a case where two members (for instance, a spinner receptor and the supporting structure 80) to be isolated are apart from each other by a sufficient distance for isolation, and also a case where two members have au insulator interposed therebetween.

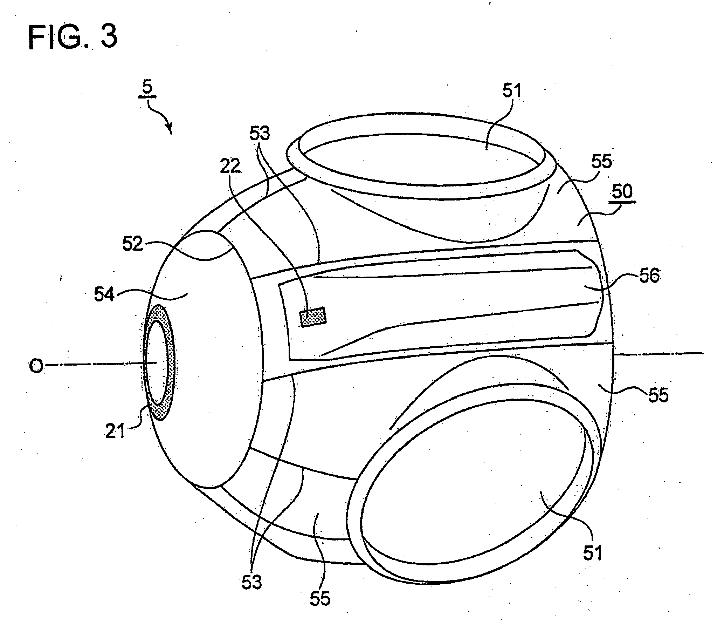

The spinner 5 is disposed so as to cover the hub 4, and configured to rotate with the blades 3 and the hub 4. The spinner 5 includes insulating material. Specifically, the spinner 5 may include non-conductive fiber-reinforced plastic, such as glass-fiber-reinforced plastic (GFRP). Also, as illustrated in FIG. 3, the spinner 5 may be divided into a plurality of sections 54, 55 by dividing lines 52, 53. In a specific configuration, the spinner 5 is divided into a front section 54 and a side section 55 by a front dividing line 52 positioned in a plane that is substantially orthogonal to the rotation axis O of the wind turbine rotor 2. Further, the side section 55 is divided by side dividing lines 53 that extend in the front-rear direction of the wind turbine rotor 2. Specifically, the side dividing lines 53 are arranged at substantially equal intervals in the circumferential direction centered at the rotation axis O, delimiting a plurality of side sections 55, 55, and so on. Here, the front-rear direction of the wind turbine rotor 2 is a direction indicating the hub 4 side as the front and the main shaft 6 (nacelle 8) side as the rear, in the direction along the rotation axis O. However, the front-rear direction of the wind turbine rotor 2 may not be necessarily parallel to the rotation axis O. For instance, while the side dividing lines 53 of the spinner 5 extend along the front-rear direction of the wind turbine rotor 2, the side dividing lines 53 are curved along the outer surface of the spinner 5. Also, at least one of the side sections 55, 55, and so on may include a projecting portion 56 having at least a part that protrudes outward. In this case; it is desirable to form the projecting portion 56 to have a smoothly-curving aerodynamic form for reducing aerodynamic loss due to the projecting portion 56. The space inside the projecting portion 56, i.e., the space between the projecting portion 56 and the hub 4 may be used as the work space for maintenance or the like, for instance.

The wind turbine rotor 2 further includes a blade lightning-protection system 10 provided for each blade 3 and a spinner lightning-protection system 20 provided for the spinner 5.

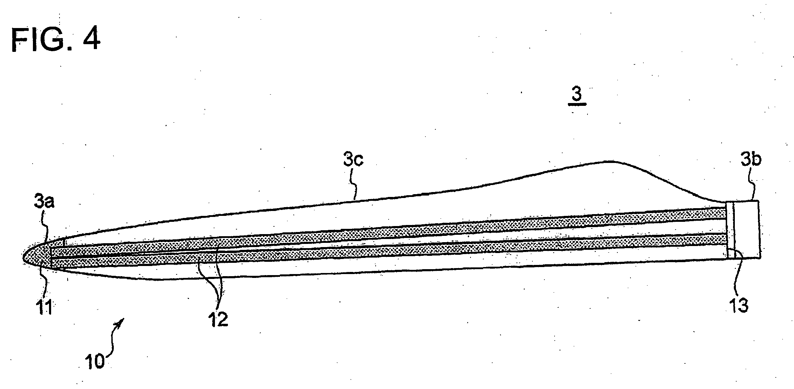

FIG. 4 illustrates an exemplary configuration of a blade having a blade lightning-protection system.

In one embodiment, the blade lightning-protection system 10 includes a blade receptor 11 disposed on the blade tip portion 3a of each blade 3, a metal foil 12 electrically connected to the blade receptor 11, and a discharge ring 13 being an electric-current transmitting part electrically connected to the metal foil 12. In the present description, an "electrically connected" state includes a case where two objects to be connected are continuously connected via a conducting body and a case where a slight gap is disposed in a path between the two objects, the gap being so slight that the two objects are no more isolated and allow electric discharge when lightning current flows between the two objects.

The blade receptor 11 includes parts having conductivity. A blade receptor 11 in one exemplary configuration is made of material mainly including copper or copper alloy, and the outer surface is covered by a corrosive-resistant covering layer. The corrosive-resistant covering layer may be formed by applying corrosive-resistant coating material on the main material, or by applying corrosive-resistant film on the main material. A blade receptor 11 in another exemplary configuration is made of material mainly including stainless steel, and the outer surface is covered by an antireflection covering layer. The antireflection covering layer may also be corrosion resistant. Naturally, the blade receptor 11 may include stainless material not covered by the antireflection covering layer. Also, the blade receptor 11 may be a solid receptor embedded in the blade tip portion 3a of the blade 3 so as to form at least a part of the blade tip portion 3a.

The metal foil 12 is configured to transmit lightning current from the blade receptor 11 to the grounding electric-current path 17 on the nacelle 8 side, also functioning as a down conductor of the blade 3 for directing lightning current from the blade tip portion 3a toward the blade root portion 3b of the blade 3. In an exemplary configuration, the metal foil 12 is electrically connected to the blade receptor 11 at one end, and electrically connected to the discharge ring 13 at the other end, so as to extend in the blade airfoil portion 3c of the blade 3 along the blade length direction (blade axial line direction). As the metal foil 12, copper foil is used, for instance. In another exemplary configuration, a mesh-like metal sheet such as copper mesh sheet may be used as the metal foil 12. Specifically, the metal foil 12 may cover the outer surface of a spar cap of the blade 3 in order to protect the spar cap. That is, the blade 3 includes an outer skin member for forming the blade airfoil portion 3c, a shear web (beam member) disposed between the suction side and the pressure side of the outer skin member and extending in the blade length direction, and a spar cap (main reinforcing member) disposed between the shear web and the outer skin member and extending in the blade length direction. In a case where the spar cap includes carbon-fiber-reinforced plastic (CFRP), for instance, the metal foil 12 is disposed at a position for covering the spar cap, and the metal foil 12 and the spar cap are electrically isolated from each other. Further, in a case where a spar cap is disposed on each of the leading edge side and the trailing edge side of the blade 3 at each of the suction side and the pressure side of the blade 3, the metal foil 12 is also disposed on each of the leading edge side and the trailing edge side, so that two metal foils 12 are disposed on each of the suction side and the pressure side of the blade 3 as illustrated in FIG. 4, which makes four metal foils 12 in total.

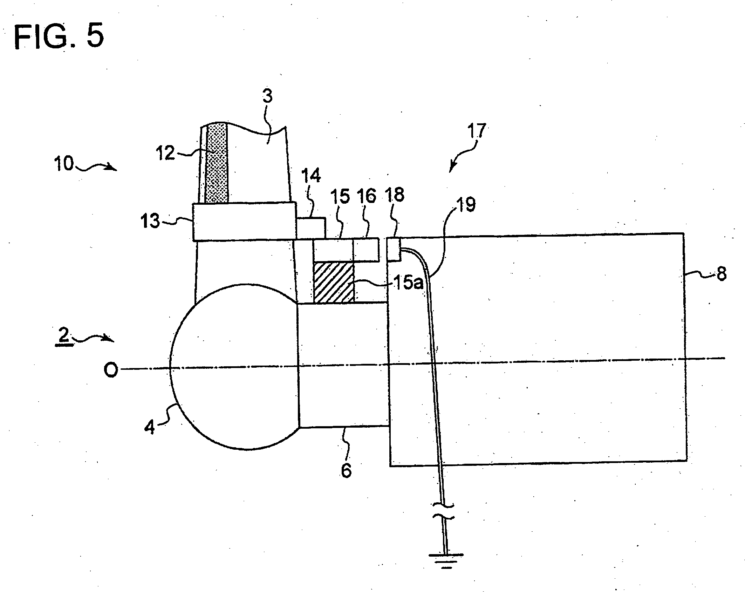

The discharge ring 13 is disposed on the blade root portion 3b of each blade 3 and functions as an electric-current transmitting part for transmitting lightning current from the blade receptor 11 to the grounding electric-current path 17 on the nacelle 8 side. Here, the position for attaching the discharge ring 13 is not limited to the blade root portion 3b of the blade 3 and may be anywhere. For instance, the discharge ring 13 may be attached to the inner side of the outer side of the hub 4 or between the blade root portion 3b and the blade tip portion 3a of the blade 3. In an exemplary configuration, the discharge ring 13 is electrically connected to one end of the metal foil 12, and also electrically connected to the grounding electric-current path 17 on the nacelle 8 side. Here, the blade 3 is configured to rotate in the pitch direction with respect to the hub 4, while the wind turbine rotor 2 is configured to rotate around the rotation axis O with respect to the nacelle 8. Thus, it may be necessary to have a configuration for constantly maintaining the electrical connection between two members (for instance, a blade and a nacelle) which are in a rotating relationship relative to each other. An example of such a configuration will be described below in reference to FIG. 5.

FIG. 5 is a side view of an exemplary configuration of a grounding current path according to one embodiment.

The first conducting body 14 is attached to the discharge ring 13. The first conducting body 14 is disposed so as to protrude outward from the discharge ring 13 and configured to rotate in the pitch direction along with the discharge ring 13. The second conducting body 15 is attached to the main shaft 6 (or the hub 4) via an insulator 15a. The first conducting body 14 is arranged to be in contact slidably with respect to the second conducting body 15, so that the contacting state between the first conducting body 14 and the second conducting body 15 is always maintained throughout the movable range of the blade 3 in the pitch direction. A discharge part 16 which protrudes toward the nacelle 8 is attached to the second conducting body 15. On the other hand, a receiving part 18 is disposed on the nacelle 8. The receiving part 18 is arranged to face the discharge part 16 via a gap such that lightning current can be discharged therebetween. Further, the receiving part 18 is disposed to correspond to the track followed by the discharge part 16 during rotation of the wind turbine rotor 2.

Further, lightning current from the blade receptor 11 (see FIG. 4) flows into the discharge ring 13 through the metal foil 12, and then flows from the discharge ring 13 to the discharge part 16 through the first conducting body 14 and the second conducting body 15. At this time, even when the blade 3 rotates in the pitch direction, it is possible to maintain the electric connection between the devices on the blade 3 side and the devices on the hub 4 side because the first conducting body and the second conducting body are always in contact with each other. Still further, the electric current, which has flowed into the discharge part 16, is discharged from the discharge part 16 and transmitted to the receiving part 18, and then directed into the ground or the water through the down conductor 19. At this time, in spite of the rotation of the wind turbine rotor 2, a certain gap is constantly maintained between the discharge part 16 and the receiving part 18, which makes it possible to maintain the electric connection between the devices on the wind turbine rotor 2 side and the devices on the nacelle 8 side.

Next, the spinner lightning-protection system 20 will be described in detail.

In some embodiments, the spinner lightning-protection system 20 includes spinner receptors (including the first receptor 21 and the second receptor 22) and cables 24, 25.

The spinner receptors are arranged to be electrically separated from the hub 4. In this way, it is possible to prevent lightning current transmitted from the spinner receptors from flowing into the hub 4 or a conductive member, and to protect the hub 4 and the various components in the spinner 5 from lightning, the components including the conductive member electrically connected to the hub 4. Also, the spinner lightning-protection system 20 may include a receptor set having a plurality of spinner receptors.

Further, the spinner receptors may include a plurality of spinner receptors disposed on different positions on the spinner 5, i.e., at least one first receptor 21 and at least one second receptor 22. As a result, it is possible to capture lightning that passes through the region over a broad range around the hub 4 by means of the spinner receptors, which makes it possible to further improve the lightning-protection performance of the wind turbine rotor 2.

Still further, the second receptors 22 may be disposed on the rear side with respect to the first receptor 21. In this way, it is possible to extend the outer circumferential (lateral) region of the hub 4, where the lightning-protection function of the spinner receptors is effective, in the front-rear direction. Thus, it becomes possible to capture lightning that passes through the region over a broad range around the hub 4 by means of the spinner receptors, which makes it possible to further improve the lightning-protection performance of the wind turbine rotor 2. Moreover, the second receptors 22 are discretely distributed in the circumferential direction centered at the rotation axis O, which makes it possible to reduce the weight of the wind turbine rotor 2 by reducing the size of the second receptors 22.

As illustrated in FIG. 2, the spinner receptors (including the first receptor 21 and the second receptors 22) are arranged so that, when projected on a plane M including the rotation axis O of the wind turbine rotor 2, at least a part of the first receptor 21 and second receptors 22 being projected is positioned on the front side with respect to the blade root portions 3b of the blades 3. That is, the first receptor 21 and the second receptors 22 are arranged so that the projected points of the first receptor 21 and the second receptors 22 projected on the plane M are positioned on the front side in the front-rear direction of the wind turbine rotor 2 with respect to the points A projected on the plane M, the points A being the foremost points of the blade root portions 3b of the blades 3. More specifically, when perpendicular lines extend from the points A positioned the foremost of the blade root portions 3b of the blades 3 perpendicularly to the rotation axis O to intersect with the rotation axis O, the intersection point here is determined as the intersection B. Also, when perpendicular lines extend from the first receptor 21 and the second receptors 22 perpendicularly to the rotation axis O to intersect with the rotation axis O, the intersection points here are determined as the intersections R₁, R₂, respectively. In this case, the first receptor 21 and the second receptors 22 are disposed so that their intersections R₁, R₂, are positioned at the front side with respect to the intersection B of the front end of the blade root portions 3b. While FIG. 2 illustrates a case where the first receptor 21 and the second receptors 22 are entirely positioned at the front side with respect to the blade root portions 3b of the blades 3, only a part of the first receptor 21 and the second receptors 22 may be disposed at the front side with respect to the blade root portions 3b. Further, when a plurality of spinner receptors are provided, at least one of the spinner receptors may be positioned at the front side with respect to the blade root portions 3b, and the remaining spinner receptors may be disposed at the rear side with respect to the front end of the blade root portions 3b.

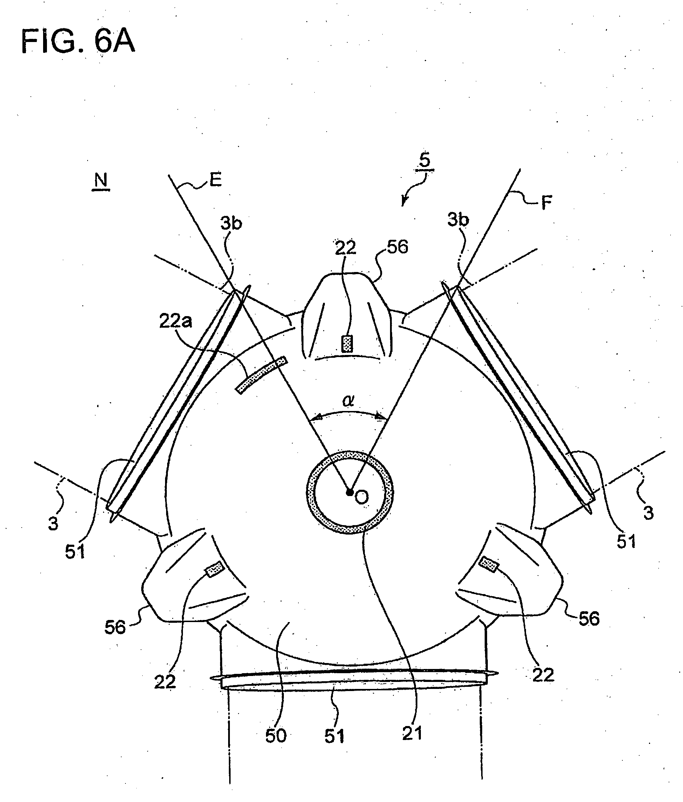

In addition to the above configuration, as illustrated in FIG. 6A, the spinner receptors (the first receptor 21 and the second receptors 22) are disposed so that at least a part of the projected first receptor 21 and second receptors 22 is positioned in the angular range α between the blade root portions 3b of adjacent two of the blades 3 when being projected on the rotational plane N of the wind turbine rotor 2. Specifically, in the rotational plane N of the wind turbine rotor 2, the angular range α is an angle formed between the lines E, F connecting the rotation axis O of the wind turbine rotor 2 and the respective points of the blade root portions 3b of adjacent two blades 3 closest to the adjacent blade 3. In this case, the first receptor 21 and the second receptors 22 are disposed so that at least a part of the first receptor 21 and the second receptors 22 is positioned within the angular range α. However, with regard to the second receptors 22, while FIG. 6A illustrates a case where each second receptor is entirely positioned within the angular range α, the second receptors 22 may be positioned so as to be partially positioned within the angular range α like the spinner receptor 22a. Further, with regard to the first receptor 21, while the drawing illustrates a case where the first receptor is partially positioned within the angular range α, the first receptor may be entirely positioned within the angular range α. Moreover, when a plurality of spinner receptors are provided, there may be at least one spinner receptor partially positioned within the angular range α, and the remaining spinner receptors may be positioned outside of the angular range α.

According to the above embodiment, the spinner lightning-protection system 20 is provided separately from the blade lightning-protection system 10, including the spinner receptors (including the first receptor 21 and the second receptors 22). Thus, it is possible to protect the wind turbine rotor 2 from lightning that has not been captured by the blade lightning-protection system 10 or the like. That is, the spinner receptors are positioned so that at least a part of the projected spinner receptors is positioned within the angular range α between the blade root portions 3b of adjacent blades 3 when being projected on the rotational plane N of the wind turbine rotor 2. As a result, it is possible to capture lightning having passed through between blades 3 by the spinner receptors. Also, the spinner receptors are disposed so that at least a part of the projected spinner receptors are positioned at the front side with respect to the blade root portions 3b of the blades 3 when being projected on the plane M including the rotation axis O of the wind turbine rotor 2. As a result, it is possible to capture lightning passing through the region in front of the wind turbine rotor 2 by the spinner receptors. Accordingly, it is possible to protect the electrical devices disposed inside the spinner 5 or the hub 4 by the spinner lightning-protection system 20.

Further, the spinner receptors (including the first receptor 21 and the second receptors 22) may include the following configuration.

As illustrated in FIG. 2 and 6A, the spinner receptors include the first receptor disposed on the outer circumferential face of the spinner 5 in the front region 70 which is a region at the front side with respect to the hub 4 and a conductive member (the supporting structure 80, for instance) disposed inside the spinner 5 and electrically connected to the hub 4. In FIG. 2, the supporting structure 80 is illustrated as a conductive member electrically connected to the hub 4. When a perpendicular line extends from the foremost point of the hub 4 and the supporting structure 80 perpendicularly to the rotation axis O to intersect with the rotation axis O, the intersection here is determined as the intersection C. In this case, the first receptor 21 is disposed at the front side with respect to the intersection C. Also, in a case where the hub 4 is positioned the foremost from among the hub 4 and the conductive member electrically connected to the hub 4, the first receptor 21 is disposed so as to be positioned at the front side with respect to the foremost end of the hub 4.

As described above, the first receptor 21 is disposed on the outer circumferential face of the spinner 5 at the front side with respect to the conductive member electrically connected to the hub 4. Thus, it is possible to prevent lightning passing through the front region 70 of the wind turbine rotor 2 from directly striking the conductive member. As a result, it is possible to protect the hub 4 and the various components inside the spinner 5 from lightning, the components including the conductive member electrically connected to the hub 4. Further, it is possible to prevent lightning current not only from flowing into the components disposed inside the spinner 5, but also from flowing through the hub 4 into various components (for example, the main bearing of the main shaft 6 of the wind turbine 1 coupled to the hub 4 of the wind turbine rotor 2) disposed on different positions in the wind turbine 1.

As illustrated in FIGs. 2 and 6A, the spinner receptors include the second receptors 22 disposed on the outer circumferential face of the spinner 5 in the side region 72 which is a region around the hub 4 and a conductive member (the supporting structure 80, for instance) disposed inside the spinner 5 and electrically connected to the hub 4. The second receptors 22 are disposed at the rear side with respect to the first receptor 21. That is, each receptor 21, 22 is positioned so that the center point, in the direction of the rotation axis O, of each second receptor 22 is positioned at the rear side with respect to the center point, in the direction of the rotation axis O, of the first receptor 21. In an exemplary configuration, the second receptors 22 illustrated in FIG. 2 are disposed at the rear side with respect to the intersection C and at the front side with respect to the intersection B. Also, in a case where the hub 4 is positioned the foremost from among the hub 4 and the conductive member electrically connected to the hub 4, the second receptors 22 are disposed so as to be positioned at the rear side with respect to the foremost end of the hub 4.

The second receptors 22 are disposed on the outer circumferential face of the spinner 5 around the conductive member electrically connected to the hub 4. Thus, it is possible to prevent lightning passing through the outer circumferential (lateral) region of the hub 4 from directly striking the conductive member. As a result, it is possible to protect the hub 4 and the various components inside the spinner 5 from lightning strikes, the components including the conductive member electrically connected to the hub 4. Further, it is possible to prevent lightning current not only from flowing into the components disposed inside the spinner 5, but also from flowing through the hub 4 into various components (for example, the main bearing of the main shaft 6 of the wind turbine 1 coupled to the hub 4 of the wind turbine rotor 2) disposed on different positions in the wind turbine 1.

In the exemplary configuration illustrated in FIG. 6A, the first receptor 21 has an annular shape centered at the rotation axis O. There are provided a plurality of the second receptors 22. Specifically, there are three second receptors 22 discretely distributed in the circumferential direction centered at the rotation axis O. Further, each of the second receptors 22 is arranged so that each projected second receptor 22 is positioned within the angular range α between the blade root portions 3b of adjacent blades 3 when being projected on the rotational plane N of the wind turbine rotor 2. Here, lightning passing through the vicinity of the blades 3 of the wind turbine rotor 2 is highly likely to be captured by the blade lightning-protection system 10. There is a possibility, however, that lightning passing through the angular range α between the blade root portions 3b of adjacent blades 3 reaches the spinner 5 without being captured by the blade lightning-protection system 10. Thus, positioning each second receptor 22 as described above so that the projected position of each second receptor 22 is within the angular range α between the blade root portions 3b of the adjacent blades 3 makes it possible to effectively capture lightning by the second receptors 22, the lightning not having been captured by the blade lightning-protection system 10. Also, the second receptors 22 are discretely distributed in the circumferential direction centered at the rotation axis O. Thus, it possible to reduce the weight of the wind turbine rotor 2 by reducing the size of the second receptors 22. Further, in a case where the spinner 5 has a curved shape and a protecting portion 56 is-disposed between two adjacent blade-through holes 51, 51, each second receptor 22 may be attached along the slope at the front of each projecting portion 56. Attaching the second receptors 22 at the slopes at the front of the projecting portions 56 as described above makes it no longer necessary to curve the second receptors 22 considerably to conform the curved shape of the spinner 5, which makes it possible to employ second receptors 22 of a flat plate-like shape.

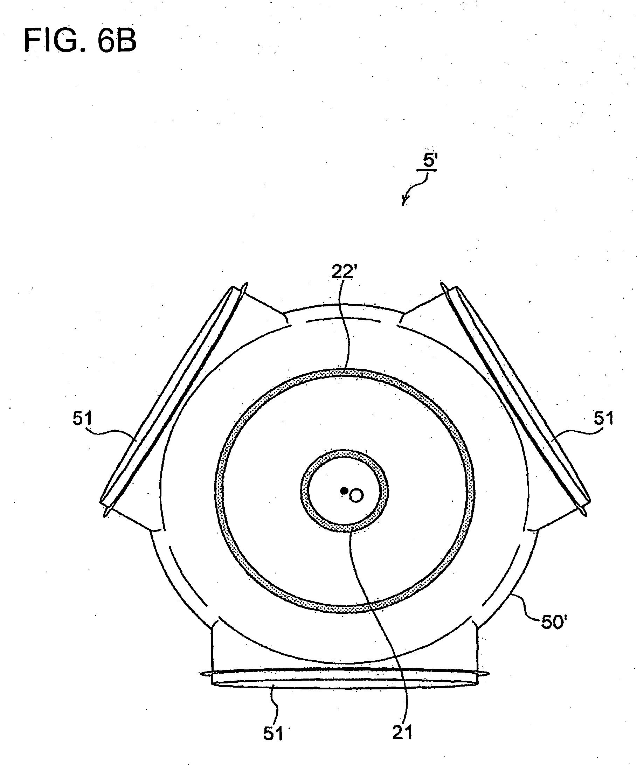

In the exemplary configuration illustrated in FIG. 6B, the first receptor 21 has an annular shape centered at the rotation axis O, and the second receptor 22 similarly has an annular shape centered at the rotation axis O, so that the first receptor 21 and the second receptor 22 form a concentric double circle. Also, the first receptor 21 may be a circular arc centered at the rotation axis O. As a result, it is possible to capture lightning passing through the region over a broad range at the front of the wind turbine rotor 2 by the first receptor 21, thereby achieving the lightning-protection function of the first receptor 21 in the broad range of the stopped position of the wind turbine rotor 2.

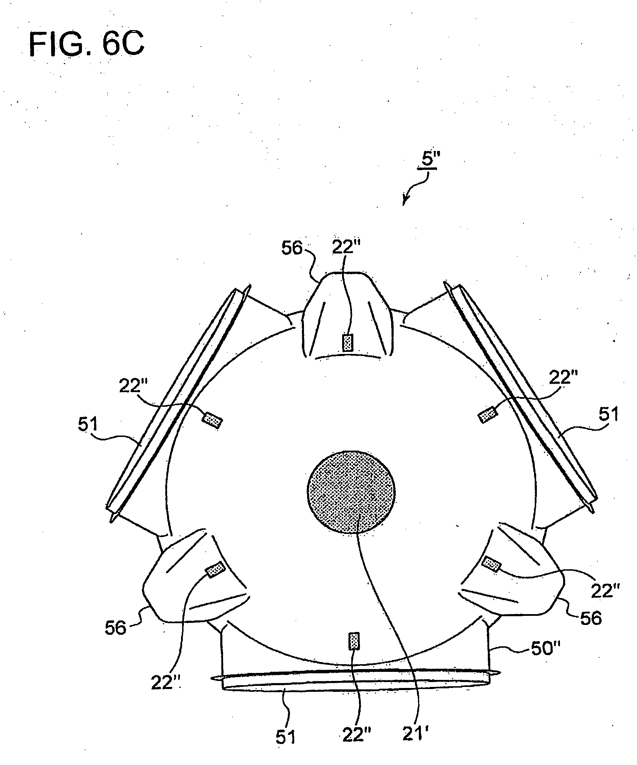

In the exemplary configuration illustrated in FIG. 6C, the first receptor 21' has a circular shape (circular disc-like shape) centered at the rotation axis O. There are six second receptors 22" discretely distributed in the circumferential direction centered at the rotation axis O. The second receptors 22" are arranged so that three of the second receptors 22" are each disposed between two adjacent blade root portions 3b and other three of the second receptors 22" are disposed in the vicinity of the respective blade root portions 3b.

As long as the first receptors 21, 21' and the second receptors 22, 22', 22" are arranged according to the above described conditions, the shape, number, and position of the same are not particularly limited.

In one embodiment, the spinner receptors are embedded into the spinner 5 so as to be exposed on the outer circumferential face of the spinner 5. Also, the steps between the outer circumferential faces of the spinner receptors and the outer circumferential face of the spinner 5 may be reduced in size so that the outer circumferential faces of each spinner receptor and of the spinner 5 continue to each other smoothly.

Embedding the spinner receptors into the spinner 5 as described above makes it possible to prevent the spinner receptors from projecting remarkably outward from the spinner 5 and to reduce aerodynamic loss caused by the spinner receptors.

Further, in one embodiment, the spinner receptors are arranged so as to be electrically isolated from a conductive member (the supporting structure 80, for example) disposed inside the spinner 5. This arrangement may be achieved by separating the spinner receptors from the conductive member by a distance long enough to provide electric isolation therebetween or by interposing an insulator between the spinner receptors and the conductive member.

As a result, it is possible to prevent lightning current from flowing into the conductive member from the spinner receptors and to protect the conductive member disposed in the spinner 5 from lightning strikes.

Further, in one embodiment, the spinner receptors include a stainless material including an antireflection covering layer.

As a result, it is possible to maintain high corrosion resistance of the spinner receptors by use of the stainless material even in harsh circumstances. Also, it is possible to suppress reflection of the sun light by the antireflection covering layer and to reduce influence of reflection on airplanes caused by the spinner receptors. As the antireflection covering layer, matting agent may be used, for instance. This antireflection covering layer may further include corrosion resistance.

Further, in another embodiment, the spinner receptors include a copper material at least partially covered by a corrosive-resistant covering layer.

As a result, it is possible to provide spinner receptors having corrosion resistance as well as high conductivity and excellent lightning-protection performance.

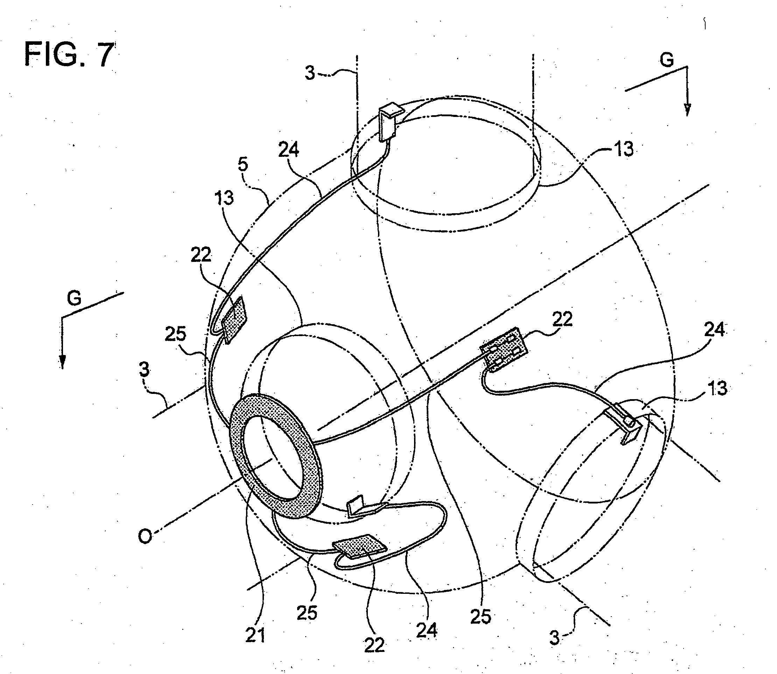

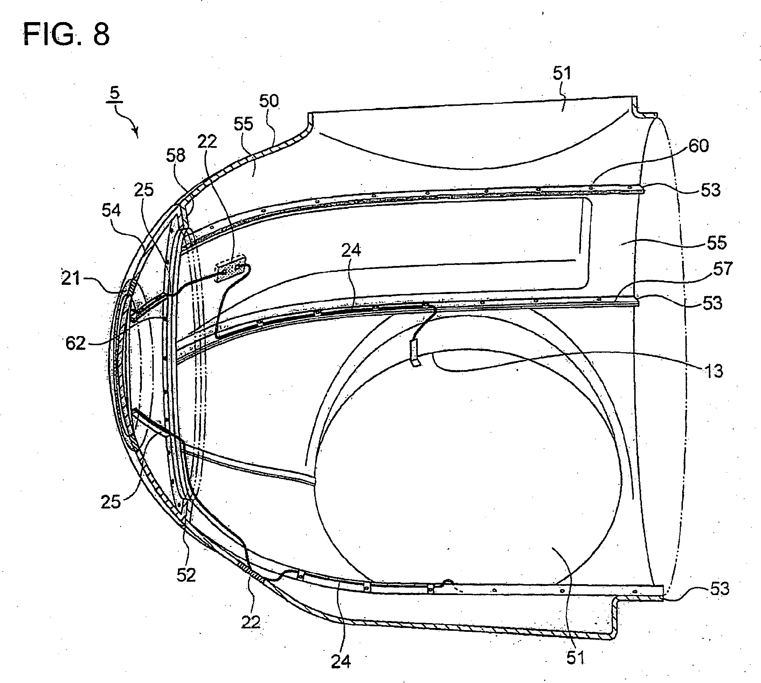

Next, in reference to FIGs. 7 and 8, the configuration for electrically connecting a receptor set and the grounding electric-current path 17 will be described. The receptor set includes the spinner receptors (including the first receptor 21 and the second receptors 22). FIG. 7 is a perspective view of an overall configuration of a spinner lightning-protection system according to one embodiment. FIG. 8 is a cross-sectional view of an example of an installed spinner lightning-protection system according to one embodiment, taken along the line G-G from FIG. 7.

The spinner lightning-protection system 20 in some embodiments includes a receptor set having a plurality of spinner receptors (including the first receptors 21 and the second receptors 22) electrically connected to one another, and at least one main cable 24 for connecting the receptor set to the grounding electric-current path 17 of the wind turbine rotor 2. In an exemplary configuration, the spinner lightning-protection system 20 illustrated in FIGs. 7 and 8 includes one first receptor 21 having an annular shape, three second receptors 22 having a plate-like shape, three main cables 24 for electrically connecting each second receptor 22 and each discharge ring 13, and three sub cables 25 for electrically connecting each second receptor 22 and the first receptor 21. The main cables 24 and the sub cables 25 may be disposed away from the hub 4 or a conductive member (the supporting structure 80, for instance (see FIG. 2)) electrically connected to the hub 4. In this way, it is possible to protect the conductive member disposed in the spinner 5 from lightning strikes. Specifically, arranging the sub cables 25 away by a sufficient distance from the conductive member makes it possible to prevent short circuit from the sub cables 25 to the conductive member. Also, the receptor set including the first receptor 21 and the second receptors 22 is connected to the grounding current path 17 through the discharge rings 13.

Connecting the plurality of spinner receptors electrically makes it no longer necessary to provide a main cable 24 connecting to the grounding current path 17 for each spinner receptor individually. Thus, it is possible to standardize the main cables 24 and associated devices. However, the number of the main cables 24 is not limited to one and may be more than one in order to enable usage of cables with relatively low cable ampacity or to make the cables redundant to improve reliability of the spinner lightning-protection system 20.

Further, the spinner receptors of the spinner lightning-protection system 20 are connected to the discharge rings (current transmitting part) 13 of the blade lightning-protection system 10 via the main cables 24 and the sub cables 25. In this way, it is possible to direct lightning current from the spinner receptors to the grounding current path 17 on the nacelle 8 side through the discharge rings 13 of the blade lightning-protection system 10. Thus, it is possible to protect the various devices which need to be protected from damage due to lightning current when lightning hits a spinner receptor. Further, arranging the main cables 24 and the sub cables 25 away from the conductive member makes it possible to protect the conductive member disposed in the spinner 5 from lightning strikes. Especially, arranging the main cables 24 and the sub cables 25 away by a sufficient distance from the conductive member makes it possible to prevent short circuit from the cables to the conductive member.

Furthermore, both of the plurality of blade receptors 11 and the plurality of spinner receptors are connected to the grounding current path 17 on the nacelle 8 side through the discharge rings 13 of the blade lightning-protection system 10. Thus, the grounding current path 17 on the nacelle 8 side for directing lightning current can be shared by the blade lightning-protection system 10 and the spinner lightning-protection system 20. As a result, it is possible to simplify the device configuration of the lightning-protection system of the wind turbine rotor 2, and to reduce the weight of the wind turbine rotor 2 in consequence of the reduced number of components.

Still further, two or more spinner receptors from among the plurality of spinner receptors are connected to the respective discharge rings 13 via the respective main cables 24, while the first receptor 21 and each second receptor 22 are electrically connected to each other via corresponding one of the sub cables 25. In this way, it is possible to transmit lightning current from the spinner receptors to the discharge rings 13 through the plurality of main cables 24 in a distributed manner. Further, the plurality of spinner receptors are electrically connected to one another via the sub cables 25. Thus, providing only one main cable 24 for each of the two or more spinner receptors may be sufficient, which makes it possible to reduce the number of main cables 24 compared to a case where each spinner receptor is individually connected to the corresponding discharge ring 13.

In one embodiment, as illustrated in FIG. 7, one first receptor 21 has a continuous shape in the circumferential direction centered at the rotation axis O, while three second receptors 22 are disposed at the rear side with respect to the first receptor 21 and discretely distributed in the circumferential direction centered at the rotation axis O. The three second receptors 22 are electrically connected to the respective discharge rings 13 through the respective main cables 24. Thus, the second receptors 22 are electrically connected to the grounding current path 17 on the nacelle 8 side via the discharge rings 13. Further, the three second receptors 22 are electrically connected to the first receptor 21 through the sub cables 25. Thus, three second receptors 22 are connected radially to the first receptor 21 at the center through the sub cables 25. Here, each second receptor 22 is connected to the grounding current path 17 in the wind turbine rotor 2 through the corresponding main cable 24. Thus, when lightning hits one of the receptors 21, 22, the lightning current flows through the three main cables 24 in a distributed manner. As a result, it is possible to restrict the maximum current that flows through the main cables 24, which also makes it possible to use cables with a low cable-ampacity value compared to a case where a single main cable 24 is provided.

As described above, one main cable 24 is provided for each of the plurality of second receptors electrically connected to one another. Thus, when lightning hits any one of the second receptors 22, the lightning current from the hit second receptor 22 flows into not only the main cable 24 provided for the hit second receptor 22 but also the main cables 24 provided for the other second receptors 22, so that the lightning current is distributed. That is, instead of providing a plurality of main cables 24 for each second receptor 22, the main cables 24 for other second receptors 22 not having been hit by lightning are utilized when lightning hits one of the second receptors, so that it possible to reduce the maximum lightning current flowing through each main cable 24.

In one embodiment, the main cables 24 or the sub cables 25 may be cables having cable ampacity of at least 200kA. As a result, it is possible to introduce the maximum lightning current expected under typical circumstances to the grounding current path without damaging the main cables 24 or the sub cables 25. The maximum lightning current here is defined to be the maximum value of the peak current determined as the highest level I from among the "lightning protection levels (LPL)" according to the IEC61400-24 guideline.

In another embodiment, the spinner lightning-protection system 20 includes n main cables 24, "n" here being the number of the main cables 24. The main cables 24 or the sub cables 25 may have cable ampacity of at least (200/n) kA. For instance, in a case as illustrated in FIG. 7 where three second receptors 22 are electrically connected to one continuous first receptor 21 in a radial fashion through the respective sub cables 25, while the second receptors 22 are electrically connected to the respective discharge rings 13 through the respective main cables 24, cables having cable ampacity of at least (200 / 3) kA are used as the main cables 24 or the sub cables 25. With the above configuration, when lightning hits any one of the receptors (the first receptor 21 or the second receptors 22), lightning current from the hit receptor is distributed to n (for instance, three) main cables 24. As a result, it is possible to reduce the maximum current flowing through each main cable 24.

Further, in a case where the spinner 5 of the wind turbine rotor 2 has a divided structure as already described in FIG. 3, each cable 24, 25 may be arranged so that at least part of each main cable 24 or at least part of each sub cable 25 extends along the joint part for joining the sections 54, 55, as illustrated in FIG. 8. In an exemplary configuration, the front section 54 and the plurality of side sections 55 of the spinner 5 include flanges 57, 58 on the end edges at the sides where each section joins another section. Also, the flanges 57, 58 of adjacent two sections are configured to join each other via bolts 60, 62. In the spinner 5 formed in this way, the flange 58 for joining the front section 54 and the plurality of side sections 55 is disposed on a plane perpendicular to the rotation axis O, while the flanges 57 for joining two side sections 55 are disposed along the front-rear direction of the wind turbine rotor 2. Thus, a part of the main cables 24 or a part of the sub cables 25 is arranged along the flanges 57, 58. For instance, in FIG. 8, a part of each sub cable 25 for connecting the first receptor 21 and one of the second receptors 22 is arranged along the flange 58. Further, a part of the main cables 24 for connecting the second receptors 22 and the discharge rings 13 is arranged along the flanges 57.

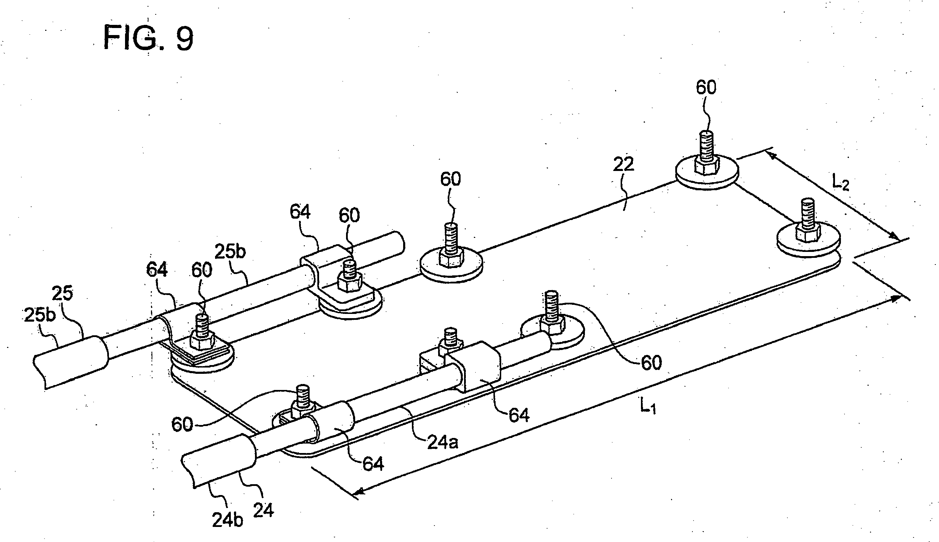

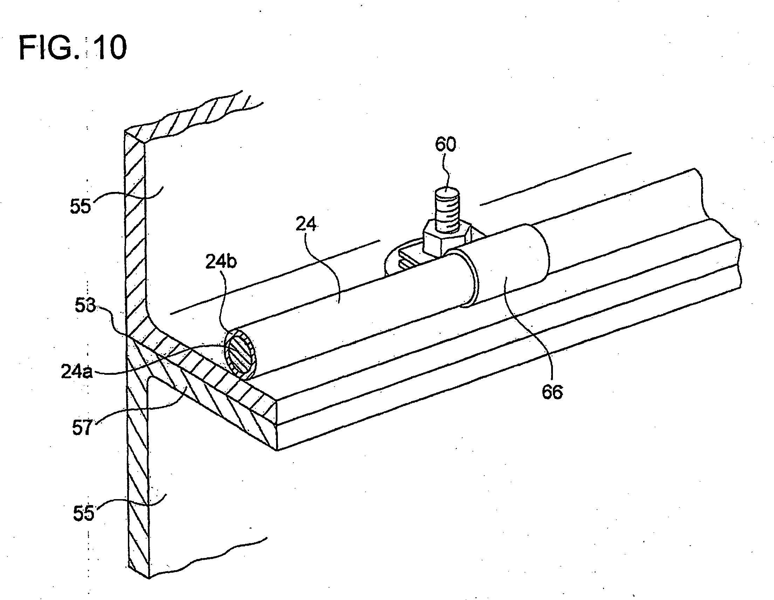

Further, as illustrated in FIGs. 9 and 10, the bolts 60 for connecting the sections 54, 55 of the spinner 5 with each other may be used to fix one of the plurality of main cables 24 or the plurality of sub cables 25 on the spinner 5.

FIG. 9 is a perspective view of an attached state of the second receptors and the cables according to one embodiment.

In one embodiment, the second receptor 22 illustrated in FIG. 9 is configured to be attached to the flange 57 (see FIG. 8) of the spinner 5 by a plurality of bolts 60. At this time, fixing jigs 64 are attached to the flange 57 along with the second receptor 22 by the bolts 60. Each fixing jig 64 includes a conducting body and has a configuration for fixing a main cable 24 or a sub cable 25. The main cable 24 here has a configuration in which a cable conducting body 24a is covered by an insulating covering layer 24b. The cable conducting body 24a is exposed at the end of the main cable 24, and the main cable 24 is fixed to the fixing jigs 64 by the bolts 60 in a state where the cable conducting body 24a is in contact with the fixing jigs 64. In this way, the main cable 24 and the second receptor 22 are electrically connected via the fixing jigs 64. Similarly, the sub cable 25 has a configuration in which a cable conducting body 25a is covered by an insulating covering layer 25b. The cable conducting body 25a is exposed at the end of the sub cable 25, and the sub cable 25 is fixed to the fixing jigs 64 by the bolts 60 in a state where the cable conducting body 25a is in contact with the fixing jig 64. In this way, the sub cable 25 and the second receptor 22 are electrically connected via the fixing jigs 64.

Further, in one embodiment, the second receptor 22 illustrated in FIG. 9 has a shape in which the size L₁ in the first direction is larger than the size L₂ in the second direction orthogonal to the first direction. Also, the second receptor 22 is disposed on the outer circumferential face of the spinner 5 so that the first direction is along the front-rear direction.

In this way, it is possible to extend the outer circumferential (lateral) region around the hub 4 where the lightning-protection function of the second receptors 22 is effective in the front-rear direction. As a result, it becomes possible to capture lightning that passes the region over a broad range of the side region 72 (see FIG. 2) around the hub 4 by the second receptors 22, and to further improve the lightning-protection performance of the wind turbine rotor 2.

FIG. 10 is a perspective view of an attached state of a cable according to one embodiment.

As illustrated in the drawing, in one embodiment, a fixing jig 66 is attached to the spinner 5 by a bolt 60 for joining the flanges 57 of the spinner 5. The fixing jig 66 is configured to fix a main cable 24 or a sub cable 25. Contrary to the case illustrated in FIG. 9, the fixing jig 66 is not electrically connected to the main cable 24 or the sub cable 25. That is, the fixing jig 66 is configured to fix the main cable 24 or the sub cable 25 over the insulating covering layer 24b of the main cable 24 or the insulating covering layer 25b of the sub cable 25.

Normally, in a case where the spinner 5 has a divided structure, the joint parts (the flanges 57, 58, for instance) of the sections 54, 55 are often formed to have higher stiffness than that of the other parts in order to secure joint strength. Thus, extending a part of the main cable 24 or a part of the sub cable 25 along the joint part makes it possible to prevent reduction in strength of the spinner 5 even when a fixing member such as a bolt for fixing the cables 24, 25 to the spinner 5 is attached thereto. Further, when the joint parts are the flanges 57, 58 as illustrated in FIG. 8, fixing the cables 24, 25 on the wall surfaces (the walls elevating from the inner wall surface of the spinner 5) of the flanges 57, 58 makes it possible to fix the cables 24, 25 by bolts 60, 62 without providing through holes on the spinner body 50. Moreover, using the fixing jigs 64, 64 makes it possible to fix the main cable 24 or the sub cable 25 to the spinner 5 by use of the bolts 60, 62 for connecting the sections 54, 55 of the spinner 5 to each other.

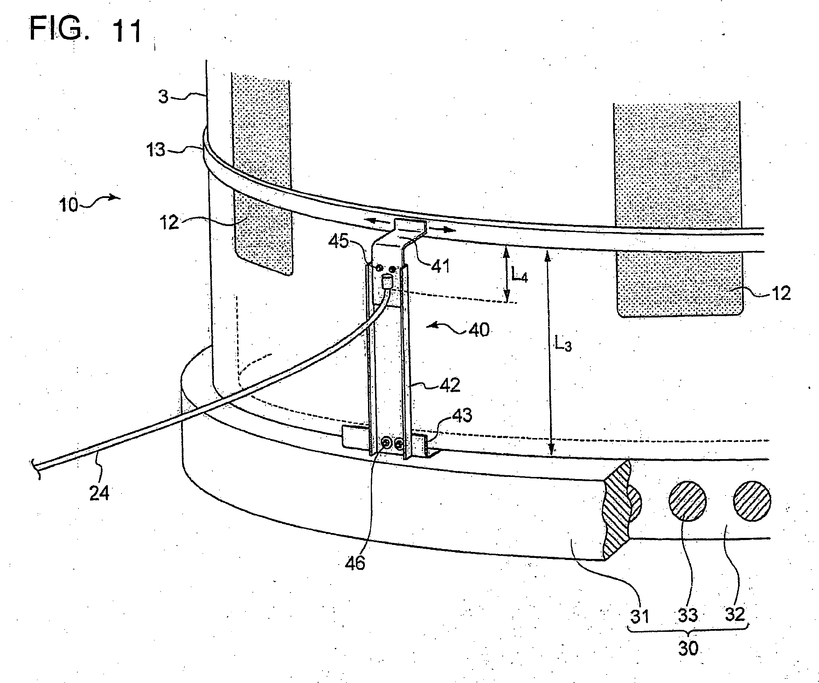

FIG. 11 is a perspective view of an attached state of a cable and a discharge ring according to one embodiment.

As illustrated in the drawing, the wind turbine rotor 2 may include a pitch bearing 30 for attaching a blade root portion 3b of each blade 3 to the hub 4. For instance, the pitch bearing 30 includes an outer race 31 to be fixed to the hub 4, an inner race 32 to be fixed to the blade 3, and a rolling body 33 held between the outer race 31 and the inner race 32. Also, the pitch bearing 30 is configured to rotate the blade 3 with respect to the hub 4 in the pitch direction by means of a driving motor (not illustrated).

In one embodiment, the wind turbine rotor 2 includes a conductive support 41 for holding a main cable 24. The support 41 is arranged so as to be electrically isolated from the hub 4 and a conductive member disposed inside the spinner 5. The end of the main cable 24 is electrically connected to a discharge ring 13 via the support 41. For instance, the end of the main cable 24 is fixed to the support 41, so that the support 41 and the main cable 24 are electrically connected to each other. The support 41 is attached to a supporting plate 42 via bolts 45. Further, the supporting plate 42 is attached to the attachment jig 43 fixed on the outer race 31 by bolts 46. In this way, the support 41 and the main cable 24 are fixed to the outer race 31 and hub 4 side. Since the blade 3 is attached to the hub 4 to be rotatable in the pitch direction, it is necessary to have a configuration which makes it possible to constantly maintain the electric connection between the support 41 and the main cable 24 attached to the hub 4 side and the discharge ring 13 attached to the blade 3 configured to be rotatable. Thus, in the present embodiment, the support 41 is slidable on the outer circumferential face of the discharge ring 13 and the electric connection can be maintained on the sliding surface between the discharge ring 13 and the support 41.

As described above, the support 41 for supporting the main cable 24 has conductivity, while the support 41 also has the function of electrically connecting the main cable 24 and the discharge ring 13. Thus, it is possible to reduce the number of components, and to facilitate the installation work. The support 41 is disposed so as to be electrically isolated from the hub 4 and the conductive member disposed in the spinner 5, so that it is possible to protect the conductive member in the spinner 5, or the hub 4 or a conductive member electrically connected to the hub 4 from lightning strikes. Here, configuration of the support 41 is not limited to the configuration illustrated in FIG 11, and may be different. For instance, a support 41 to which the main cable 24 is connected may be fixed to the discharge ring 13 side, and the main cable 24 having flexibility may be bended to address rotation in the pitch direction of the blade 3.

In one embodiment, the distance L₃ between a pitch bearing 30 and a discharge ring 13 is larger than the distance L₄ between a main cable 24 and a discharge ring 13. Here, the distance L₃ between the pitch bearing 30 and the discharge ring 13 is the shortest distance between the pitch bearing 30 and the discharge ring 13. Also, the distance L₄ between the main cable 24 and the discharge ring 13 may be the shortest distance between the connecting point of the main cable 24 and the support 41 and the discharge ring 13.

With the above arrangement, when short-circuit occurs in.the main cable 24, the short-circuit current flows to the discharge ring 13 which is closer to the main cable 24 than the pitch bearing 30 is, so that it is possible to protect the pitch bearing 30.

In one embodiment, the distance between a pitch bearing 30 and a discharge ring 13 may be not less than 0.3m.

Also, in another embodiment, the distance between a pitch bearing 30 and a main cable 24 may be not less than 0.3m.

As described above, according to the above embodiments, the spinner lightning-protection system 20 is provided separately from the blade lightning-protection system 10, including the spinner receptors (the first receptor 21 and the second receptors 22) disposed on the spinner 5. Thus, it is possible to protect the wind turbine rotor 2 from lightning that has not been captured by the blade lightning-protection system 10 or the like. Also, it is possible to protect the electrical devices disposed in the spinner 5 or the hub 4 from lightning strikes by means of the spinner lightning-protection system 20.

Further, the spinner receptors are electrically connected to the discharge rings 13 through the cables 24, 25. Thus, it is possible to protect various devices which need to be protected from damage due to lightning current when a spinner receptor is hit by lightning.

Still further, both of the plurality of blade receptors 11 and the plurality of spinner receptors are electrically connected to the grounding current path 17 on the nacelle 8 side via the discharge rings 13. Thus, it is possible to simplify the device configuration of the lightning-protection system of the wind turbine rotor 2 and to reduce the weight of the wind turbine rotor 2 in consequence of the reduced number of the components.

Embodiments of the present invention were described in detail above, but the present invention is not limited thereto, and various amendments and modifications may be implemented within a scope that does not depart from the present invention.

## Claims

1. A wind turbine rotor (2) **characterized in that** it comprises:
at least one blade (3);
a hub (4) to which the at least one blade (3) is attached;
a spinner (5) disposed so as to cover the hub (4), the spinner (5) including an insulating material;
a blade lightning-protection system (10) provided for each of the at least one blade (3); and
a spinner lightning-protection system (20) provided for the spinner (5),
wherein the blade lightning-protection system (10) includes:
a blade receptor (11) disposed on the at least one blade (3); and
a current transmitting part (13) electrically connected to the blade receptor (11) for transmitting lightning current from the blade receptor (11) to a grounding current path (17) on a nacelle side, and
wherein the spinner lightning-protection system (20) includes:
at least one spinner receptor (21, 22) disposed on the spinner (5); and
a cable (24) for electrically connecting the spinner receptor (21, 22) and the current transmitting part (13),
**characterized in that** the at least one spinner receptor (21, 22) is disposed on an outer circumferential surface of the spinner (5).

2. The wind turbine rotor (2) according to claim 1,
wherein the current transmitting part is disposed on a blade root portion (3b) of the at least one blade (3),
wherein the at least one spinner receptor (21, 22) includes a plurality of receptors disposed on different positions on the spinner (5), and
wherein the spinner lightning-protection system (20) includes:
a plurality of main cables (24) for electrically connecting respective two or more receptors from among the plurality of receptors to the current transmitting part (13); and
a plurality of sub cables (25) for electrically connecting the plurality of receptors with one another.

3. The wind turbine rotor (2) according to claim 2,
wherein the at least one spinner receptor (21, 22) includes a first receptor (21) and a plurality of second receptors (22) disposed at a rear side with respect to the first receptor (21) in a discretely-distributed fashion in a circumferential direction centered at a rotation axis of the wind turbine rotor (2), where a hub side is defined as a front side and a nacelle side is defined as the rear side in an axial direction of the rotation axis of the wind turbine rotor,
wherein the first receptor (21) and each of the plurality of second receptors (22) are electrically connected to each other via corresponding one of the sub cables (25), and
wherein the plurality of main cables (24) are disposed so as to electrically connect respective ones of the plurality of second receptors (22) to the current transmitting part (13).

4. The wind turbine rotor (2) according to claim 2 or 3, further comprising
conductive supports (41) for attaching the main cables (24) to the current transmitting part,
wherein the supports (41) are arranged so as to be electrically isolated from the hub (4) and a conductive member (80) disposed in the spinner (5).

5. The wind turbine rotor (2) according to any one of claims 2 to 4,
wherein the sub cables (25) are arranged to be separated from the conductive member (80).

6. The wind turbine rotor (2) according any one of claims 2 to 5,
wherein the spinner includes a plurality of divided sections (54, 55) of the spinner,
wherein each of the sections (54, 55) includes a joint part (57, 58) which is to be joined to another section disposed adjacent to said each of the sections, and
wherein at least a part of the main cables (24) or at least a part of the sub cables (25) extends along the joint part (57, 58).

7. The wind turbine rotor (2) according to any one of claims 2 to 6,
wherein the main cables (24) or the sub cables (25) are cables having cable ampacity of at least 200kA.

8. The wind turbine rotor (2) according to any one of claims 2 to 7,
wherein the number of the main cables (24) included in the spinner lightning-protection system (20) is n, and
wherein the main cables (24) or the sub cables (25) are cables having cable ampacity of at least (200 / n) kA.

9. The wind turbine rotor (2) according to any one of claims 1 to 8,
wherein the at least one spinner receptor (21, 22), is disposed so as to be electrically isolated from the hub (4) and a conductive member (80) disposed in the spinner (5).

10. The wind turbine rotor (2) according to any one of claims 1 to 9,
wherein the spinner lightning-protection system (20) includes:
at least one cable (24) for electrically connecting the at least one spinner receptor (21) to the current transmitting part of the wind turbine rotor (2); and
a conductive fixing member (41) for fixing the at least one cable (24) and the at least one spinner receptor (21) to the spinner, and
wherein the at least one cable (24) is configured to be electrically connected to the at least one spinner receptor (21) via the fixing member (41).

11. The wind turbine rotor (2) according to any one of claims 1 to 10, further comprising
a pitch bearing (30) for attaching the blade root portion (3b) of the at least one blade (3) to the hub (4),
wherein a distance (L3) between the pitch bearing (30) and the current transmitting part (13) is larger than a distance (L4) between corresponding one of the main cables (24) and the current transmitting part (13).

12. The wind turbine rotor (2) according to claim 11,
wherein the distance between the pitch bearing (30) and the current transmitting part (13) is not less than 0.3m.

13. The wind turbine rotor (2) according to claim 11 or 12,
wherein the distance between the corresponding main cable (24) and the pitch bearing (30) is not less than 0.3m.

14. The wind turbine rotor (2) according to any one of claims 1 to 13,
wherein the spinner (5) includes non-conductive fiber-reinforced plastic.

15. A wind turbine (1) comprising a wind turbine rotor according to any one of claims 1 to 14.

## Patentansprüche

1. Windkraftanlagenrotor (2), **dadurch gekennzeichnet, dass** er umfasst:
mindestens ein Rotorblatt (3),
eine Nabe (4), an der das mindestens eine Rotorblatt (3) befestigt ist,
eine Haube (5), die angeordnet ist, um die Nabe (4) abzudecken, wobei die Haube (5) ein Isolationsmaterial umfasst,
ein Rotorblatt-Blitzschutzsystem (10), das für jedes des mindestens einen Rotorblatts (3) vorgesehen ist, und
ein Hauben-Blitzschutzsystem (20), das für die Haube (5) vorgesehen ist,
wobei das Rotorblatt-Blitzschutzsystem (10) umfasst:
einen Rotorblattrezeptor (11), der an dem mindestens einen Rotorblatt (3) angeordnet ist, und
einen Stromleitteil (13), der zum Leiten von Blitzstrom von dem Rotorblattrezeptor (11) zu einem Erdungsstrompfad (17) auf einer Gondelseite elektrisch mit dem Rotorblattrezeptor (11) verbunden ist, und
wobei das Hauben-Blitzschutzsystem (20) umfasst:
mindestens einen Hauben-Rezeptor (21, 22), der an der Haube (5) angeordnet ist, und
ein Kabel (24) zum elektrischen Verbinden des Hauben-Rezeptors (21, 22) und des Stromleitteils (13),
**dadurch gekennzeichnet, dass** der mindestens eine Hauben-Rezeptor (21, 22) an einer äußeren Umfangsoberfläche der Haube (5) angeordnet ist.

2. Windkraftanlagenrotor (2) nach Anspruch 1,
wobei der Stromleitteil an einem Rotorblattwurzelabschnitt (3b) des mindestens einen Rotorblatts (3) angeordnet ist,
wobei der mindestens eine Hauben-Rezeptor (21, 22) mehrere Rezeptoren umfasst, die an verschiedenen Positionen an der Haube (5) angeordnet sind, und
wobei das Hauben-Blitzschutzsystem (20) umfasst:
mehrere Hauptkabel (24) zum elektrischen Verbinden von jeweils zwei oder mehr Rezeptoren aus den mehreren Rezeptoren mit dem Stromleitteil (13), und
mehrere Nebenkabel (25) zum elektrischen Verbinden der mehreren Rezeptoren miteinander.

3. Windkraftanlagenrotor (2) nach Anspruch 2,
wobei der mindestens eine Hauben-Rezeptor (21, 22) einen ersten Rezeptor (21) und mehrere zweite Rezeptoren (22), die in Bezug auf den ersten Rezeptor (21) an einer Rückseite auf eine getrennt verteilte Weise in einer Umfangsrichtung mit Mittelpunkt an einer Drehachse des Windkraftanlagenrotors (2) angeordnet sind, wobei in einer axialen Richtung der Drehachse des Windkraftanlagenrotors eine Nabenseite als Vorderseite definiert ist und eine Gondelseite als Rückseite definiert ist,
wobei der erste Rezeptor (21) und jeder der mehreren zweiten Rezeptoren (22) über ein entsprechendes der Nebenkabel (25) elektrisch miteinander verbunden sind, und
wobei die mehreren Hauptkabel (24) derart angeordnet sind, dass sie jeweilige der mehreren zweiten Rezeptoren (22) mit dem Stromleitteil (13) elektrisch verbinden.

4. Windkraftanlagenrotor (2) nach Anspruch 2 oder 3, ferner umfassend:
leitfähige Träger (41) zum Befestigen der Hauptkabel (24) an dem Stromleitteil,
wobei die Träger (41) derart angeordnet sind, dass sie von der Nabe (4) und einem in der Haube (5) angeordneten leitfähigen Glied (80) elektrisch getrennt sind.

5. Windkraftanlagenrotor (2) nach einem beliebigen der Ansprüche 2 bis 4,
wobei die Nebenkabel (25) derart angeordnet sind, dass sie von dem leitfähigen Glied (80) getrennt sind.

6. Windkraftanlagenrotor (2) nach einem beliebigen der Ansprüche 2 bis 5,
wobei die Haube mehrere unterteilte Abschnitte (54, 55) der Haube umfasst,
wobei jeder der Abschnitte (54, 55) einen Verbindungsteil (57, 58) umfasst, der mit einem anderen Abschnitt, der jedem der Abschnitte benachbart angeordnet ist, zu verbinden ist, und
wobei sich mindestens ein Teil der Hauptkabel (24) oder mindestens ein Teil der Nebenkabel (25) entlang des Verbindungsteils (57, 58) erstreckt.

7. Windkraftanlagenrotor (2) nach einem beliebigen der Ansprüche 2 bis 6,
wobei die Hauptkabel (24) oder die Nebenkabel (25) Kabel mit einer Kabelstrombelastbarkeit von mindestens 200 kA sind.

8. Windkraftanlagenrotor (2) nach einem beliebigen der Ansprüche 2 bis 7,
wobei die Anzahl der Hauptkabel (24), die in dem Hauben-Blitzschutzsystem (20) enthalten sind, n ist, und
wobei die Hauptkabel (24) oder die Nebenkabel (25) Kabel mit einer Kabelstrombelastbarkeit von mindestens (200 / n) kA sind.

9. Windkraftanlagenrotor (2) nach einem beliebigen der Ansprüche 1 bis 8,
wobei der mindestens eine Hauben-Rezeptor (21, 22) derart angeordnet ist, dass er von der Nabe (4) und einem in der Haube (5) angeordneten leitfähigen Glied (80) elektrisch getrennt ist.

10. Windkraftanlagenrotor (2) nach einem beliebigen der Ansprüche 1 bis 9,
wobei das Hauben-Blitzschutzsystem (20) umfasst:
mindestens ein Kabel (24) zum elektrischen Verbinden des mindestens einen Hauben-Rezeptors (21) mit dem Stromleitteil des Windkraftanlagenrotors (2), und
ein leitfähiges Befestigungsglied (41) zum Befestigen des mindestens einen Kabels (24) und des mindestens einen Hauben-Rezeptors (21) an der Haube, und
wobei das mindestens eine Kabel (24) dazu ausgebildet ist, über das Befestigungsglied (41) mit dem mindestens einen Hauben-Rezeptor (21) elektrisch verbunden zu sein.

11. Windkraftanlagenrotor (2) nach einem beliebigen der Ansprüche 1 bis 10, ferner umfassend:
ein Blattlager (30) zum Befestigen des Rotorblattwurzelabschnitts (3b) des mindestens einen Rotorblatts (3) an der Nabe (4),
wobei ein Abstand (L3) zwischen dem Blattlager (30) und dem Stromleitteil (13) größer als ein Abstand (L4) zwischen einem entsprechenden der Hauptkabel (24) und dem Stromleitteil (13) ist.

12. Windkraftanlagenrotor (2) nach Anspruch 11,
wobei der Abstand zwischen dem Blattlager (30) und dem Stromleitteil (13) nicht kleiner als 0,3 m ist.

13. Windkraftanlagenrotor (2) nach Anspruch 11 oder 12,
wobei der Abstand zwischen dem entsprechenden Hauptkabel (24) und dem Blattlager (30) nicht kleiner als 0,3 m ist.

14. Windkraftanlagenrotor (2) nach einem beliebigen der Ansprüche 1 bis 13,
wobei die Haube (5) nichtleitfähigen faserverstärkten Kunststoff umfasst.

15. Windkraftanlage (1), die einen Windkraftanlagenrotor nach einem beliebigen der Ansprüche 1 bis 14 umfasst.

## Revendications

1. Rotor d'éolienne (2) **caractérisé en ce qu'**il comporte :
au moins une pale (3) ;
un moyeu (4) sur lequel la au moins une pale (3) est fixée ;
un cône (5) disposé de façon à couvrir le moyeu (4), le cône (5) comprenant une matière isolante ;
un système de protection de pale contre la foudre (10) prévu pour chacune de la au moins une pale (3) ; et
un système de protection de cône contre la foudre (20) prévu pour le cône (5),
dans lequel le système de protection de pale contre la foudre (10) comprend :
un récepteur de pale (11) disposé sur la au moins une pale (3) ; et
une partie de transmission de courant (13) électriquement reliée au récepteur de pale (11) pour la transmission de courant de foudre depuis le récepteur de pale (11) jusqu'à un passage de courant de mise à la terre (17) sur un côté de nacelle, et
dans lequel le système de protection de cône contre la foudre (20) comprend :
au moins un récepteur de cône (21, 22) disposé sur le cône (5) ; et
un câble (24) destiné à relier électriquement le récepteur de cône (21, 22) et la partie de transmission de courant (13),
**caractérisé en ce que** le au moins un récepteur de cône (21, 22) est disposé sur une surface circonférentielle extérieure du cône (5).

2. Rotor d'éolienne (2) selon la revendication 1,
dans lequel la partie de transmission de courant est disposée sur une partie de pied de pale (3b) de la au moins une pale (3),
dans lequel le au moins un récepteur de cône (21, 22) comprend une pluralité de récepteurs disposés sur différentes positions sur le cône (5), et
dans lequel le système de protection de cône contre la foudre (20) comprend :
une pluralité de câbles principaux (24) pour relier électriquement deux récepteurs respectifs ou plus parmi la pluralité de récepteurs à la partie de transmission de courant (13) ; et
une pluralité de câbles secondaires (25) pour relier électriquement la pluralité de récepteurs l'un à l'autre.

3. Rotor d'éolienne (2) selon la revendication 2,
dans lequel le au moins un récepteur de cône (21, 22) comprend un premier récepteur (21) et une pluralité de deuxièmes récepteurs (22) disposés sur un côté arrière par rapport au premier récepteur (21) répartie de manière discrète dans une direction circonférentielle centrée sur un axe de rotation du rotor d'éolienne (2), où un côté de moyeu est défini comme un côté avant et un côté de nacelle est défini comme un côté arrière dans une direction axiale de l'axe de rotation du rotor d'éolienne,
dans lequel le premier récepteur (21) et chaque récepteur de la pluralité de deuxièmes récepteurs (22) sont électriquement reliés l'un à l'autre par l'intermédiaire d'un câble correspondant parmi les câbles secondaires (25), et
dans lequel la pluralité de câbles principaux (24) est disposée de façon à relier électriquement les récepteurs respectifs de la pluralité de deuxièmes récepteurs (22) à la partie de transmission de courant (13).

4. Rotor d'éolienne (2) selon la revendication 2 ou 3, comportant en outre
des supports conducteurs (41) pour fixer les câbles principaux (24) sur la partie de transmission de courant,
dans lequel les supports (41) sont disposés de façon à être électriquement isolés du moyeu (4) et d'un élément conducteur (80) disposé dans le cône (5).

5. Rotor d'éolienne (2) selon l'une quelconque des revendications 2 à 4,
dans lequel les câbles secondaires (25) sont disposés de façon à être séparés de l'élément conducteur (80).

6. Rotor d'éolienne (2) selon l'une quelconque des revendications 2 à 5,
dans lequel le cône comprend une pluralité de sections divisées (54, 55) du cône,
dans lequel chacune des sections (54, 55) comprend une partie de jonction (57, 58) qui doit être reliée à une autre section disposée de façon adjacente à chacune desdites sections, et
dans lequel au moins une partie des câbles principaux (24) ou au moins une partie des câbles secondaires (25) s'étend le long de la partie de jonction (57, 58).

7. Rotor d'éolienne (2) selon l'une quelconque des revendications 2 à 6,
dans lequel les câbles principaux (24) ou les câbles secondaires (25) sont des câbles ayant un courant admissible d'au moins 200kA.

8. Rotor d'éolienne (2) selon l'une quelconque des revendications 2 à 7,
dans lequel le nombre de câbles principaux (24) inclus dans le système de protection de cône contre la foudre (20) est n, et
dans lequel les câbles principaux (24) ou les câbles secondaires (25) sont des câbles ayant un courant admissible d'au moins (200/n)kA.

9. Rotor d'éolienne (2) selon l'une quelconque des revendications 1 à 8,
dans lequel le au moins un récepteur de cône (21, 22) est disposé de façon à être électriquement isolé du moyeu (4) et d'un élément conducteur (80) disposé dans le cône (5).

10. Rotor d'éolienne (2) selon l'une quelconque des revendications 1 à 9,
dans lequel le système de protection de cône contre la foudre (20) comprend :
au moins un câble (24) pour relier électriquement le au moins un récepteur de cône (21) à la partie de transmission de courant du rotor d'éolienne (2) ; et
un élément de fixation conducteur (41) pour fixer le au moins un câble (24) et le au moins un récepteur de cône (21) sur le cône, et
dans lequel le au moins un câble (24) est configuré pour être électriquement relié au au moins un récepteur de cône (21) par l'intermédiaire de l'élément de fixation (41).

11. Rotor d'éolienne (2) selon l'une quelconque des revendications 1 à 10, comportant en outre
un palier de pas (30) pour fixer la partie de pied de pale (3b) de la au moins une pale (3) sur le moyeu (4),
dans lequel une distance (L3) entre le palier de pas (30) et la partie de transmission de courant (13) est plus grande qu'une distance (L4) entre un câble correspondant parmi les câbles principaux (24) et la partie de transmission de courant (13).

12. Rotor d'éolienne (2) selon la revendication 11,
dans lequel la distance entre le palier de pas (30) et la partie de transmission de courant (13) n'est pas inférieure à 0,3 m.

13. Rotor d'éolienne (2) selon la revendication 11 ou 12,
dans lequel la distance entre le câble principal correspondant (24) et le palier de pas (30) n'est pas inférieure à 0,3 m.

14. Rotor d'éolienne (2) selon l'une quelconque des revendications 1 à 13,
dans lequel le cône (5) comprend une matière plastique renforcée de fibres non conductrice.

15. Eolienne (1) comportant un rotor d'éolienne selon l'une quelconque des revendications 1 à 14.
